Europäisches Patentamt

European Patent Office

Office européen des brevets

(11) Publication number: **0 160 370**
**A1**

## (12) EUROPEAN PATENT APPLICATION

(21) Application number: 85301663.2

(22) Date of filing: 11.03.85

(51) Int. Cl.⁴: **A 01 C 7/08**
**A 01 C 7/20, A 01 F 12/48**

(30) Priority: 14.03.84 US 589523

(43) Date of publication of application:
06.11.85 Bulletin 85/45

(84) Designated Contracting States:
DE FR GB

(71) Applicant: DEERE & COMPANY
1 John Deere Road
Moline Illinois 61265(US)

(72) Inventor: Webber, Jerry Don
111-6th Avenue
Moline Illinois 61265(US)

(74) Representative: Pears, David Ashley et al,
REDDIE & GROSE 16 Theobalds Road
London WC1X 8PL(GB)

(54) Modular manifold for planting implement.

(57) A planting implement has a transverse bar (12) with a plurality of brackets (38) for supporting seed meters at adjustable positions matching a desired planting row spacing. The seed meters are air meters fed with pressurized air from a blower (28) mounted on brackets (80, 82). The blower is disposed at the middle of a manifold (24) with branch couplings (44) connected to respective ones of the seed meters by corresponding hoses (46). In order to be able to match the positions of the couplings (44) to the positions of the seed meters the manifold is composed of distribution tubes (52, 60, 56, 70) which carry the couplings (44) and alternate with connecting tubes (62, 72). The connecting tubes are telescopically and slidably received within the distribution tube and sealed by O-ring (64, 74) in grooves at the ends of the connecting tubes.

./...

EP 0 160 370 A1

Fig.3

MODULAR MANIFOLD FOR PLANTING IMPLEMENT

The present invention relates to a manifold as defined in the introductory part of claim 1, especially for coupling a source of pressurized air to a plurality of seed meters or other planting devices within a planting implement. The invention also relates to a planting implement.

In the field of agricultural equipment, it is known to have a planting implement in which a source of pressurized air must be coupled to a plurality of seed meters or other planting devices. The seed meters are typically mounted in side-by-side fashion across the width of a main frame which is supported by wheels as it is towed behind a tractor. Each seed meter typically comprises part of a separate planting unit which includes an opener for opening a furrow in the ground below, the seed meter which meters or dispenses seeds from a supply thereof contained within a seed hopper into the furrow at a controlled rate and closing wheels which move the loose dirt at the opposite sides of the furrow into the furrow and onto the dispensed seeds.

In planting implements of the type described, the seed meters may be of the mechanical type or of the air type. Where the seed meters are of the air type, each meter must be coupled to a source of pressurized air. The source of pressurized air may provide either blowing air (positive pressure) or a vacuum (negative pressure) depending upon the type of air seed meter being used. An example of a seed meter which operates using a vacuum is provided by our co-pending European patent application 84307456.8.

Various arrangements have been employed to couple a source of pressurized air to the various seed meters in those planting implements where seed meters of the air type are used. One known arrangement couples a common source of pressurized air to each of the seed meters using a separate one of a plurality of flexible hoses. Such arrangement enjoys considerable flexibility in that the individual seed meters can be relatively easily relocated on the main frame of the planting implement to change the row spacing between the adjacent meters. However, the resulting maze of flexible hoses is a cumbersome and expensive one. In an alternative arrangement known in the art, a different source of pressurized air is provided for each seed meter or for each group of two or three seed meters. Each seed meter can then be coupled to its associated source using a relatively short length of flexible hose. The resulting arrangements for connecting the seed meters to the sources of pressurized air are relatively simple and inexpensive, but at the cost of having to provide a plurality of the pressurized air sources.

Accordingly, it is often preferred that a manifold be used in conjunction with a single source of pressurized air so that the single source can be coupled to all of the seed meters. Such manifolds can typically be constructed so as to minimize the expense thereof and the space consumed thereby. Presently known manifolds are typically comprised of a series of metal pipes or plastic tubes of various different lengths. The pipes or tubes are typically fastened together in rigid, permanent fashion such as by welding in the case of metal pipes or by gluing in the case of plastic tubes. While such arrangements are relatively economical and conserving of space, the rigid joining of the various components thereof typically makes it difficult if not impossible to change row spacings within a planting implement once the manifold is installed. Where the planting implement is used to plant different kinds of seeds, it

- 3 -

**0160370**

is frequently necessary that the spacing between adjacent seed meters be adjusted in order to accommodate a change in the row spacing in preparation for the planting of a different type of seed. However difficulty arises when the manifold coupling the source of pressurized air to the seed meters is of non-adjustable configuration such as occurs where the individual components thereof are welded, glued or otherwise permanently fastened to each other. In such installations it may be necessary to remove certain components of the manifold and replace those components with other components of different size, an operation which can be expensive and very time consuming. Morever, it would be desirable in the first instance to have a manifold composed of a few standardized components which are readily adjustable so as to facilitate the initial assembly and installation of the manifold in addition to allowing for subsequent alterations to accommodate such things as changes in row spacing.

Accordingly, it is an object of the invention to provide a manifold for a planting implement in which the manifold is composed of standardized components and does not require a variety of different components of different sizes or a custom installation in which the various components must be cut to size. More specifically it is an object to provide a manifold in which the various components thereof are adjustable so as to maintain an air tight sealing relationship therebetween while permitting changes in the relative positions thereof to provide for changes in row spacing. It is known in the art to provide adjustable conduits for carrying pressurized air as shown for example by US 4,357,860. However, nothing in the art has shown or suggested the manner in which an adjustable manifold arrangement for coupling a source of pressurized air to a plurality of different seed meters or similar units may be provided.

The manifold in accordance with the invention is characterised in claim 1. Preferably the manifold is composed of modular components which are limited to a few standard sizes. The need to carry a large variety of different sizes is thereby eliminated. Also, the need to custom design or cut components for each particular installation is largely eliminated.

The standardized components are sealed together in substantially air tight relation by slidable, adjustable sealing arrangements which permit relative movement of the adjoining components of the manifold within limits while at the same time maintaining the air tight sealing relationship. This facilitates both the initial installation of the manifold and subsequent adjustments thereof to accommodate changes such as in the row spacing of the planting implement. The adjustability of the manifold provides for installation thereof within planting implements assuming a variety of different configurations and sizes using components having only a few standard sizes. Manifolds which have already been installed are easily changed to accommodate such things as changes in the row spacing between the individual seed meters.

In one embodiment of a modular manifold in accordance with the invention, the manifold is composed of a plurality of distribution tubes of standard lengths which are disposed in spaced-apart relation along the length of the manifold. Adjacent pairs of the distribution tubes are coupled together by connecting tubes which are also standardized so that at least most if not all of the connecting tubes within the manifold have a like length. The connecting tubes are of hollow, generally cylindrical configuration between opposite ends thereof. Each of the distribution tubes has a hollow, generally cylindrical portion thereof which extends between opposite ends thereof and which has an inner diameter at the opposite ends thereof which is larger than the outer diameter of the connecting tubes. In this manner the opposite ends of the connecting tubes fit in and slide freely within the opposite ends of the distribution tubes. Each of the distribution tubes also includes a coupling portion disposed at a central region of the hollow, generally cylindrical portion and adapted to receive a flexible hose for coupling of the interior of the distribution tube to a different seed meter within a planting implement on which the manifold is mounted.

The interface between the inner surface of each end of a distribution tube and the outer surface of an end of a connecting tube received therein is sealed by an arrangement which includes an O-ring of elastomeric material disposed in an annular groove in the outer surface of the connecting tube and extending into contact with the inner surface of the distribution tube around the entire length of the O-ring. The O-ring is preferably covered with a lubricant to facilitate a slidable and adjustable and yet sealing fit between the O-ring and the inner wall of the distribution tube. The resulting sealing arrangement composed of the O-ring and mating groove is easy to use when installing the manifold and thereafter permits movement of the received end of the connecting tube along the end of the distribution tube within a defined range of positions while at the same time maintaining the air tight sealing relationship at the interface between the connecting and distribution tubes. This allows the manifold to be adjusted in size to accommodate such things as changes in row spacing of the planting implement.

The manifold is coupled to a source of positive or negative pressurized air by a plenum which is disposed at a central location along the length of the manifold. The plenum has connecting tubes built into the opposite sides thereof which receive the ends of a pair of distribution tubes. The ends of the distribution tubes at the opposite ends of the manifold are closed by end plugs which fit into the open ends of the distribution tubes to seal off the open ends from the outside of the manifold.

The invention also provides a planting implement as defined in claim 8.

The invention will be described in more detail with reference to a preferred embodiment of the invention, as illustrated in the accompanying drawing, in which:

Fig. 1 is a perspective view of a planting implement utilizing a modular manifold in accordance with the invention;

Fig. 2 is a perspective view of a portion of the planting implement of Fig. 1 illustrating the manner in which the modular manifold is mounted thereon;

Fig. 3 is a perspective, exploded view of the modular manifold of Figs. 1 and 2 together with some of the apparatus used to mount the manifold on the main frame of the planting implement;

Fig. 4 is a perspective view of a distribution tube and a connecting tube of the manifold of Fig. 4 together with O-rings used to provide a slidable, adjustable seal therebetween;

Fig. 5 is a sectional view of a pair of the distribution tubes and an interconnecting connecting tube illustrating one extreme of the various relative positions which are made possible by the slidable, adjustable seals;

Fig. 6 is a sectional view of the pair of distribution tubes and the interconnecting connecting tube of Fig. 5 showing the other extreme of the relative positions which are made possible by the slidable, adjustable seals;

Fig. 7 is a sectional view of a portion of the plenum of the modular manifold of Fig. 3 together with a distribution tube and a portion of a connecting tube;

Fig. 8 is a perspective view of a seal used in the arrangement of Fig. 7;

Fig. 9 is a sectional view of a distribution tube together with an end plug and a portion of a connecting tube; and

Fig. 10 is a perspective view of the end plug of Fig. 9.

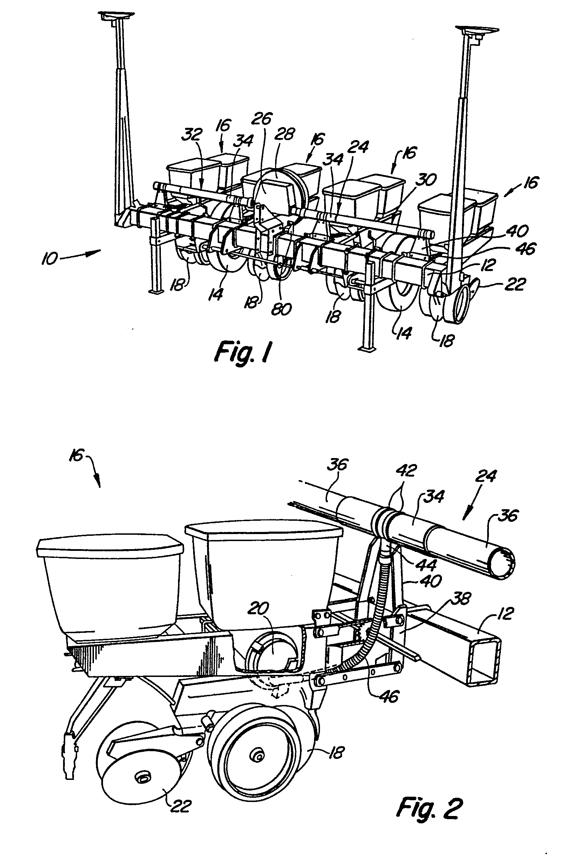

Figs. 1 and 2 depict a planting implement 10 having a main frame 12 extending along the length thereof and supported at the opposite ends by wheels 14. The planting implement 10 includes a plurality of planting units 16 mounted in spaced-apart relation along the length of the main frame 12. Each planting unit 16 includes an opener 18, a seed meter 20 and a pair of closing wheels 22.

As the planting implement 10 is towed over the ground by a tractor coupled to the main frame 12, the opener 18 within each planting unit 16 opens a different furrow within the ground. The seed meter 20 which is mounted just behind the opener 18 within each planting unit 16 deposits seeds within the opened furrow at a controlled rate. The closing wheels 22 which are mounted just behind the seed meter 20 in each planting unit 16 push loose dirt at the sides of the furrow into the furrow and over the deposited seeds to complete the planting operation.

The planting implement 10 is provided with a modular manifold 24 in accordance with the invention. The manifold 24 is of elongated configuration so as to extend along a substantial part of the length of the main frame 12 on which the manifold 24 is mounted. The manifold 24 includes a plenum 26 in the form of an accumulator disposed at a central region thereof and coupled to an adjacent blower 28 which comprises a source of pressurized air. The opposite sides of the plenum 26 are coupled to opposite lengths 30 and 32 of the manifold 24, enabling the blower 28 to communicate therewith.

Each of the lengths 30 and 32 is comprised of a series of interconnecting distribution tubes 34 and connecting tubes 36 which interconnect to form slidable seals therebetween. Such interconnections which are described in detail hereafter facilitate the easy relocation of the distribution tubes 34 to accommodate such things as changes in the row spacing of the planting implement 10. The distribution tubes 34 and the connecting tubes 36 are modular components consisting of a few standardized sizes. All of the connecting tubes 36 in the modular manifold 24 of the present example are of like, standardized size. All of the distribution tubes 36 in the present example are also of like, standardized size with the exception of the tubes at the outer end of the lengths 30 and 32, which outer tubes are of shorter lengths and accommodate end caps as described hereafter.

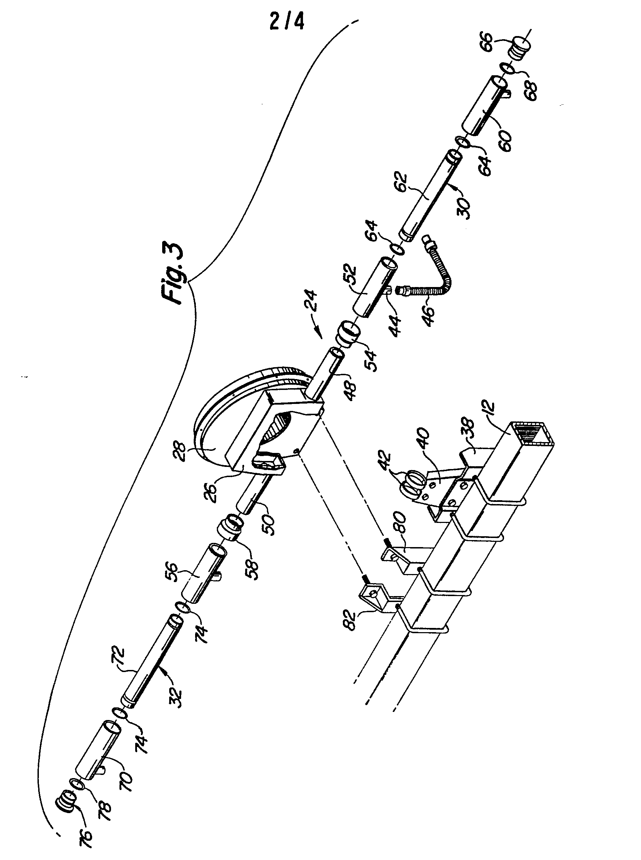

As shown in Figs. 2 and 3, each of the seed meters 20 is coupled to the main frame 12 by a mounting bracket 38. Attached to and extending upwardly from each mounting bracket 38 is a support 40 having a pair of circular bands 42 coupled to the upper end thereof. Each pair of the circular bands 42 encircles a different one of the distribution tubes 34 of the manifold 24 on the opposite sides of a coupling portion 44 at a central region of the distribution tube 34. Each coupling portion 44 receives a length of flexible hose 46 extending from the adjacent seed meter 20 to couple the manifold 24 via the hollow interior of the distribution tube 34 to the seed meter 20.

The manifold 24 is shown in considerable detail in Fig. 3. As shown therein the plenum 26 has a pair of relatively short connecting tubes 48 and 50 extending from the opposite sides thereof. The connecting tube 48 is coupled to a distribution tube 52 by a seal 54. Likewise the connecting tube 50 is coupled to a distribution tube 56 by a seal 58. The distribution tube 52 in turn is coupled to a distribution tube 60 by a connecting tube 62 having a pair of O-rings 64 mounted on the opposite ends thereof. An outer end of the distribution tube 60 opposite the connecting tube 62 is sealed by an end plug 66 and an O-ring 68 to complete the length 30 of the manifold 24.

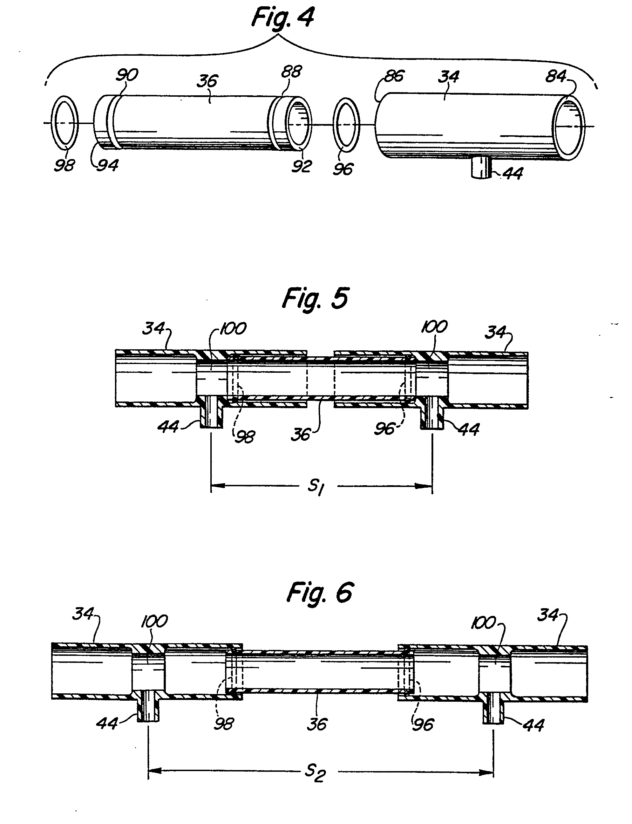

At the opposite length 32 of the manifold 24, the distribution tube 56 is coupled to a distribution tube 70 by a connecting tube 72 having a pair of O-rings 74 mounted on the opposite ends thereof. The opposite outer end of the distribution tube 70 is sealed by an end plug 76 and an associated O-ring 78. One of the flexible hoses 46 which couple the various distribution tubes 34 to the associated seed meters 20 is shown in Fig. 4. The hose 46 shown in Fig. 3 couples the coupling portion 44 of the distribution tube 52 to an adjacent seed meter 20.

One of the mounting brackets 38 is shown in Figs. 2 and 3 together with the associated support 40. The particular support 40 shown in Fig. 3 mounts the distribution tube 52 thereon. A pair of mounting brackets 80 and 82 mounted on the main frame 12 receive and mount the plenum 26 and the associated blower 28 thereon.

Fig. 4 shows a distribution tube 34 and a connecting tube 36. The distribution tube 34 is of hollow, generally cylindrical configuration between a pair of opposite ends 84 and 86 thereof and has the coupling portion 44 at a central region thereof. The coupling portion 44 provides a means of mounting or connection for one of the flexible hoses 46 so that the hose 46 can communicate with the interior of the distribution tube 34. The distribution tube 34 has an inner diameter of given, standard size so as to make the distribution tube 34 compatible with the connecting tube 36.

The connecting tube 36 is of hollow, generally cylindrical configuration and has a pair of grooves 88 and 90 therein adjacent opposite ends 92 and 94 thereof. A pair of O-rings 96 and 98 similar to the O-rings 64, 68, 74 and 78 of Fig. 3 are seated in the grooves 88 and 90 respectively. The connecting tube 36 has a given outer diameter of fixed, standard size which is slightly smaller than the inner diameter of the distribution tube 34. This provides for a sliding fit of the connecting tube 36 within the distribution tube 34. With the O-ring 96 seated within the groove 88, the end 92 of the connecting tube 36 is inserted into the open end 86 of the distribution tube 34. The O-ring 96 bears against the interior surface of the distribution tube 34 as well as remaining seated within the groove 88 to maintain an airtight sealing fit. At the same time the end 92 of the connecting tube 36 is slidable within the end 86 of the distribution tube 34 while at the same time maintaining the airtight seal. This movable, sliding seal allows modular manifolds in accordance with the invention to be easily assembled, disassembled and adjusted in size and position to accommodate such things as changes in the row spacing of the seed meter 20. The various O-rings such as the O-rings 96 and 98 which have generally circular-shaped cross-sections and which are preferably made of neoprene or other elastomeric material may be coated with a small amount of lubricant such as grease to facilitate sliding movement of the connecting tube 36 within the distribution tube 34 while at the same time maintaining the airtight seal.

Figs. 5 and 6 illustrate the adjustability feature of modular manifolds in accordance with the invention. Both such figures illustrate a pair of distribution tubes 34 together with an intermediate connecting tube 36. The various tubes 34 and 36 are shown in cross-section to illustrate the relative positioning of the connecting tube 36 within the distribution tubes 34.

In the illustration of Fig. 5 the opposite ends of the connecting tube 36 have been inserted into the adjacent distribution tubes 34 as far as they will go. Each of the distribution tubes 34 has an annular flange 100 formed at the intermediate portion of the hollow interior thereof adjacent the coupling portion 44. The annular flange 100 has an inner diameter which is smaller than both the inner diameter of the opposite ends of the distribution tube 34 and the outer diameter of the connecting tube 36. In the illustration of Fig. 5 the opposite ends of the connecting tube 36 abut the annular flanges 100 of the opposite distribution tubes 34. This defines a row spacing $S_1$ between the coupling portions 44 of the opposite distribution tubes 34. The row spacing $S_1$ represents the minimum row spacing that can be achieved with the modular components illustrated. The annular flanges 100 prevent the ends of the connecting tubes 36 from extending over and sealing off the coupling portions 44 of the distribution tubes 34.

The row spacing $S_1$ can be increased by sliding the distribution tubes 34 in opposite directions along the connecting tube 36. This allows the row spacing to increase until a maximum row spacing $S_2$ is reached as illustrated in Fig. 6. In the illustration of Fig. 6 the opposite ends of the connecting tube 36 extend into the ends of the distribution tubes 34 just far enough to maintain the sealing fit therebetween. The O-rings 96 and 98 at the opposite ends of the connecting tube 36 slide rather easily within the ends of the distribution tubes 34, particularly when lubricated, making adjustment of the arrangement shown in Figs. 5 and 6 relatively easy.

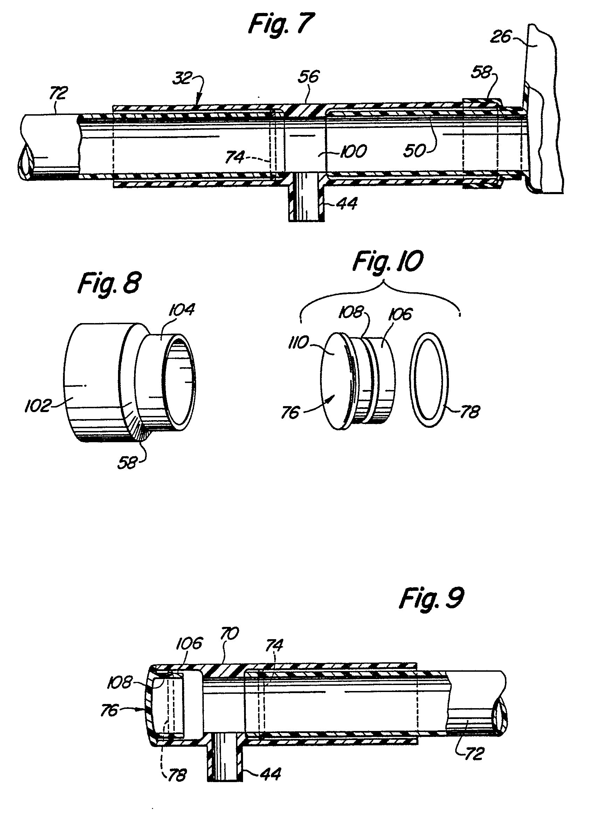

Fig. 7 illustrates a portion of the plenum 26 together with the connecting tube 50 at the side thereof, the distribution tube 56, a portion of the connecting tube 72, and the seal 58 of Fig. 3. The connecting tube 50 is coupled through the hollow interior of the plenum 26 to the blower 28 (not shown in Fig. 8). This enables the pressurized air provided by the blower 28 to communicate with the length 32 of the manifold 24. The connecting tube 50 resides within one side of the distribution tube 56. The connecting tube 72 resides within the other side of the distribution tube 56. The seal 58 provides a sealing fit between the connecting tube 50 and the distribution tube 56. The seal 58 which is of generally circular configuration as illustrated in Fig. 9 has a first circular portion 102 of larger diameter adapted to fit over the outside surface of the distribution tube 56. The seal 58 also has a second circular portion 104 of reduced diameter adapted to fit snugly over the outer surface of the connecting tube 50. The seal 58 is preferably made of elastomeric material such as neoprene to provide a snug, sealing fit.

Fig. 9 illustrates the distribution tube 70 within the length 32 together with a portion of the connecting tube 72 and the end plug 76 in the arrangement of Fig. 3. The distribution tube 70 shown in Fig. 9 as well as the distribution tube 60 at the opposite end of the manifold 24 are of slightly different configuration from the distribution tubes 52 and 56 in that they have an end portion on one side of the coupling portion 44 which is shortened so as to be just large enough to accommodate the end plugs 66 and 76. The end plug 76 is shown in Fig. 10 together with the associated O-ring 78. The end plug 76 is comprised of a generally cylindrical portion 106 thereof having an annular

0160370

groove 108 in the outer surface thereof for receiving the O-ring 78. The end of the cylindrical portion 106 is covered by a cap portion 110 of slightly larger diameter than the cylindrical portion 106. As shown in Fig. 9 the outer circumference of the cap portion 110 abuts the outer end of the distribution tube 70 to define the seated position of the end plug 76 within the distribution tube 70.

The end plug 76 is capable of sealing the otherwise open end of the distribution tube 70 when the blower 28 communicates a reduced pressure or vacuum to the various seed meters 20 via the manifold 24. In instances where the seed meters are of the type that require a positive pressure from the blower 28 the O-ring 78 may not be capable of retaining the end plug 76 in place if the air pressure produced by the blower 28 is high enough. In that event other means of securing the end plug 76 in place within the distribution tube 70 may be required such as a threaded fit therebetween.

The various distribution tubes 34 and connecting tubes 36 as well as the end plugs 66 and 76 may be made of any appropriate material such as plastic or metal.

CLAIMS

1.  A manifold for distributing pressurized air from a source (28) thereof to a plurality of devices (20), comprising a tubular structure (52, 60, 62) with couplings (44) spaced therealong for connection to the respective devices, characterised in that the tubular structure is formed of distribution units (52, 60, 56, 70) which carry the said couplings (44) and alternate with connecting units (62, 72) the distribution and connecting units being slidably coupled together so that the spacings between the couplings (44) can be varied.

2.  A manifold according to claim 1, characterised in that the connecting units (62, 72) are of like length and at least some of the plurality of distribution units (52, 60, 56, 70) are of like length.

3.  A manifold according to claim 1 or 2, characterised by a plenum unit (26) coupled to the source of pressurized air, the plenum unit being disposed within the manifold and coupled to two of the distribution units (52, 56) at opposite sides thereof, and two end plugs (66, 76) coupled to two of the distribution units (60, 70) at opposite ends of the manifold.

4.  A manifold according to claim 3, characterised in that the plenum (26) has oppositely-projecting tubes (48, 50) telescopically coupled to two of the distribution units (52, 56).

5.  A manifold according to any of claims 1 to 4, characterised in that the slidably coupled units (52, 62, 60, 26, 72, 70) are sealed relative to each other by O-ring seals (64, etc).

6.  A manifold according to claim 5, characterised in that the connecting units (62, 72) are tubes which are telescopically received in the distributing units (52, 60, 56, 70) and each have an O-ring (64) seated in a groove at each end thereof.

- 14 -

**0160370**

7.  A manifold according to claim 6, characterised in that each distributing unit (52, 60, 56, 70) has an internal collar (100) limiting the extent to which connecting tubes (62, 72) can be slid into the distributing unit.

8.  A planting implement comprising a row of seed meters (20) coupled to a source (28) of pressurized air by way of a manifold (24) provided with spaced couplings (44) individually connected to the seed meters (20) by respective hoses (46), characterised in that the manifild (24) comprises a plurality of distribution tubes (52, 60, 56, 70) which carry the said couplings (44) and alternate with connecting tubes (62, 72), the distribution and connecting tubes being telescopically and slidably coupled together so that the spacings between the couplings (44) can be varied to match spacings of the seed meters (20).

0160370

1/4

Fig. 1

Fig. 2

Fig. 3

2/4

0160370

0160370

3/4

## Fig. 4

## Fig. 5

## Fig. 6

0160370

4/4

**Fig. 7**

72 · 32 · 56 · 58 · 26 · 74 · 100 · 50 · 44

**Fig. 8**

104 · 102 · 58

**Fig. 10**

108 · 106 · 110 · 76 · 78

**Fig. 9**

106 · 70 · 74 · 108 · 76 · 78 · 44 · 72

## European Patent Office

**EUROPEAN SEARCH REPORT**

### DOCUMENTS CONSIDERED TO BE RELEVANT

| Category | Citation of document with indication where appropriate, of relevant passages | Relevant to claim | CLASSIFICATION OF THE APPLICATION (Int. Cl.4) |
|---|---|---|---|
| A | DE-A-2 025 039 (H. WEISTE) <br> * Claim 1, figure 1 * | 1 | A 01 C 7/08 <br> A 01 C 7/20 <br> A 01 F 12/48 |
| A | FR-A- 640 054 (S.A. DES ETABLISSEMENTS DE CONSTRUCTIONS MECANIQUES DE VENDEUVRE) <br> * Complete document * | 1 | |

**TECHNICAL FIELDS SEARCHED (Int. Cl.4)**

A 01 C 7/00
A 01 C 15/00
A 01 F 12/00
A 01 G 25/00
A 01 M 7/00
A 01 M 9/00

The present search report has been drawn up for all claims

| Place of search | Date of completion of the search | Examiner |
|---|---|---|
| BERLIN | 11-06-1985 | WUNDERLICH J E |